# EUROPÄISCHE PATENTANMELDUNG

(11) **EP 4 641 884 A1**
(43) Veröffentlichungstag der Anmeldung: **29.10.2025**
(21) Anmeldenummer: 24178224.2
(22) Anmeldetag: 27.05.2024
(51) Int. Cl.: H02J 50/12, A47K 13/30, H02J 50/80

(54) **DRAHTLOSES ENERGIEÜBERTRAGUNGSSYSTEM FÜR EINE SANITÄREINRICHTUNG**

(30) Priorität: 25.04.2024 EP 24172368
(71) Anmelder: Geberit International AG, 8645 Jona (CH)
(72) Erfinder: Ackermann, Emil, 9122 Mogelsberg (CH)
(74) Vertreter: Gulde & Partner

(57) **Zusammenfassung**

Die vorliegende Erfindung betrifft ein Energieübertragungssystem (1) für eine Sanitäreinrichtung, insbesondere für eine Toilette, umfassend eine erste Vorrichtung (2) mit einem primären Resonanzkreis (3), und eine zweite Vorrichtung (4) mit einem sekundären Resonanzkreis (5), welcher mit dem primären Resonanzkreis (3) gekoppelt und zum drahtlosen Empfang von Energie, welche zum Betrieb eines Verbrauchers (6) vorgesehen ist, eingerichtet ist, wobei die erste Vorrichtung (2) dazu eingerichtet ist, eine an den sekundären Resonanzkreis (5) zu übertragende Energie für eine vordefinierte Zeitspanne zu ändern, und die zweite Vorrichtung (4) dazu eingerichtet ist, anhand der Zeitspanne, für welche die übertragene Energie geändert wurde, einen Wert eines intendierten Zielparameters zu bestimmen. Die vorliegende Erfindung betrifft ferner ein entsprechendes Verfahren.

## Beschreibung

Die vorliegende Erfindung betrifft ein Energieübertragungssystem für eine Sanitäreinrichtung, insbesondere für eine Toilette, sowie eine entsprechende Sanitäreinrichtung. Gegenstand der vorliegenden Erfindung ist ferner ein Verfahren zur Energieübertragung für eine Sanitäreinrichtung.

Aus dem Stand der Technik sind Sanitäreinrichtungen wie Toiletten, Dusch-WCs, Hygienespülungen und dergleichen bekannt, welche eine erweiterte Funktionalität bieten und beispielsweise eine Beheizbarkeit von Komponenten erlauben, mit denen ein Nutzer in Berührung kommt. So erlauben so genannte Sitzringheizungen (auch als Sitzheizung bezeichnet) in WC-Sitzen dem Nutzer einen erhöhten Nutzungskomfort. Über entsprechende in einem WC-Sitz angeordnete Sensoren lassen sich ferner Benutzerinformationen wie Gewicht und weiteren physiologischen Daten erfassen und mittels einer Kommunikationsverbindung übermitteln.

Nachteilig an solchen Anwendungen gemäß Stand der Technik ist, dass diese mittlerweile zwar mitunter über eine drahtlose Energieübertragung (Wireless Power Transfer, WPT) verfügen, neben dieser drahtlosen Energieübertragung jedoch weiterhin zusätzlich eine dedizierte Kommunikationsverbindung erforderlich ist, insbesondere um von einem WC-Sitz aus Steuerbefehle, betreffend beispielsweise eine Temperatureinstellung durch den Nutzer, an eine die Eingangsspannung bereitstellende Komponente übermitteln zu können.

Aus den vorstehend beschriebenen Erfordernissen hinsichtlich einer Kommunikation resultiert, dass die Komplexität des Gesamtproduktes zunimmt und für einen Hersteller gegebenenfalls für die Nutzung von Industriestandards Lizenz- und Zertifizierungsgebühren anfallen können, beispielsweise für Bluetooth Low Energy (BLE).

Vor diesem Hintergrund liegt der vorliegenden Erfindung die Aufgabe zugrunde, eine Lösung bereitzustellen, welche die vorgenannten Nachteile vermeidet und ein verbessertes Energieübertragungssystem für Sanitäreinrichtungen bereitstellt.

Erfindungsgemäß wird diese Aufgabe gelöst durch ein Energieübertragungssystem für eine Sanitäreinrichtung, insbesondere für eine Toilette, umfassend eine erste Vorrichtung mit einem primären Resonanzkreis und eine zweite Vorrichtung mit einem sekundären Resonanzkreis, welcher mit dem primären Resonanzkreis gekoppelt und zum drahtlosen Empfang von Energie, welche zum Betrieb eines Verbrauchers vorgesehen ist, eingerichtet ist. Dabei ist die erste Vorrichtung dazu eingerichtet, eine an den sekundären Resonanzkreis zu übertragende Energie für eine vordefinierte Zeitspanne zu ändern, und die zweite Vorrichtung ist dazu eingerichtet, anhand der Zeitspanne, für welche die übertragene Energie geändert wurde, einen Wert eines intendierten Zielparameters zu bestimmen. Der Zielparameter kann beispielsweise eine von einer Sitzringheizung, welche als elektrischer Verbraucher agiert, zu erreichende Temperatur darstellen.

Vorliegend kann die erste Vorrichtung auch als Sender und die zweite Vorrichtung als Empfänger bezeichnet werden.

Auf diese Weise wird es durch die erfindungsgemäße Lösung ermöglicht, dass eine für die drahtlose Übertragung von Energie vorgesehene Schaltung gleichzeitig zur zumindest unidirektionalen Kommunikation (von Sender zu Empfänger) genutzt werden kann. So lässt sich eine zusätzliche Kommunikationsschaltung vermeiden, wodurch eine Gesamtkomplexität und damit einhergehende Herstellungskosten verringert werden.

Vorzugsweise umfasst eine Änderung der zu übertragenden Energie für die vordefinierte Zeitspanne ein Reduzieren der zu übertragenden Energie. Auf diese Weise kann die als Empfänger agierende zweite Vorrichtung beispielsweise mittels eines Spannungsabfalls über einem Shunt (auch als Shunt-Widerstand oder Mess-Shunt bezeichnet) oder mittels eines Spannungsabfalls über der Last die Änderung der in den Verbraucher, welcher als Last fungiert, abgegebenen Energie messen bzw. ermitteln.

In einer bevorzugten Ausgestaltung umfasst die zweite Vorrichtung hierzu eine Messvorrichtung mit einem Shunt, mittels welchem - aufgrund eines gegebenen Spannungsabfalls - eine Änderung der an den Verbraucher (z.B. eine Sitzringheizung) abgegebenen Energie während der vordefinierten Zeitspanne messbar ist. Analog kann über einen Spannungsteiler, welcher an der den Verbraucher (z.B. einer Sitzringheizung) versorgenden Spannung vorgesehen ist, die abgegebene Energie ermittelt werden.

Vorteilhafterweise umfasst die erste Vorrichtung eine Steuerungsvorrichtung, die dazu eingerichtet ist, eine der ersten Vorrichtung bereitgestellte Eingangsspannung mittels Pulsdauermodulation (PDM) zu takten. Die an den Verbraucher bzw. die Last (in Form einer Sitzringheizung) übertragene Energie kann somit in der ersten Vorrichtung mittels PDM der resonanten Übertragungsfrequenz beeinflusst werden. Dadurch wird der primäre Resonanzkreis in Resonanz betrieben, wodurch ein Wirkstrom fließt, der am Shunt eine Spannung proportional zum Wirkstrom und entsprechend zum Laststrom erzeugt. In der zweiten Vorrichtung fließt der Laststrom somit durch den Shunt und erzeugt so eine dem Laststrom proportionale Spannung.

Vorzugsweise ist die Steuerungsvorrichtung dazu eingerichtet, die an den sekundären Resonanzkreis zu übertragende Energie mittels Änderung des Tastgrades der PDM anzupassen.

Wenn die erste Vorrichtung den Tastgrad bzw. das Tastverhältnis (d.h. ton/T) der PDM verkleinert, wird weniger Energie an die zweite Vorrichtung übertragen. Auf diese Weise kann die zweite Vorrichtung einen Spannungsabfall über dem Shunt und somit eine Änderung der in den Verbraucher bzw. die Last (z.B. eine Sitzringheizung) abgegebenen Energie messen.

In einer bevorzugten Ausgestaltung ist die Steuerungsvorrichtung dazu eingerichtet, den Tastgrad für eine vordefinierte Zeitspanne anzupassen, insbesondere zu reduzieren. Die zweite Vorrichtung kann so anhand einer gemessenen Zeitspanne und beispielsweise einer zuvor definierten Tabelle die von der ersten Vorrichtung an die zweite Vorrichtung übertragene Information auswerten.

Vorteilhafterweise umfasst die erste Vorrichtung einen Zeitmesser mittels welchem die vordefinierte Zeitspanne steuerbar ist. Dieser kann beispielsweise Bestandteil der Steuerungsvorrichtung sein.

Vorzugsweise ist der Zeitmesser zur Steuerung einer Vielzahl vordefinierter Zeitspannen eingerichtet, welche unterschiedlichen Werten des intendierten Zielparameters zugeordnet sind. Beispielsweise kann eine Tabelle vorgesehen sein, in welcher eine jeweilige Zeitspanne einer gewünschten Temperaturstufe, die dem Empfänger mitgeteilt werden soll, zugeordnet ist.

In einer bevorzugten Ausgestaltung sind für die Vielzahl vordefinierter Zeitspannen Werte im Bereich von 100-300 ms, insbesondere 100 ms, 150 ms, 200 ms, 250 ms und 300 ms, vorgesehen. Vorteilhafterweise ist der intendierte Zielparameter eine Temperatur der Sitzringheizung. Beispielsweise entspricht eine Zeitspanne von 100 ms, in welcher eine von der ersten Vorrichtung an die zweite Vorrichtung übertragene Energie reduziert wurde, einer gewünschten Temperatur der Sitzringheizung von 28 °C, eine Zeitspanne von 150 ms einer gewünschten Temperatur der Sitzringheizung von 30 °C, eine Zeitspanne von 200 ms einer gewünschten Temperatur der Sitzringheizung von 32 °C, eine Zeitspanne von 250 ms einer gewünschten Temperatur der Sitzringheizung von 35 °C und eine Zeitspanne von 300 ms einer gewünschten Temperatur der Sitzringheizung von 37 °C. Diese Werte sind lediglich beispielhaft und nicht beschränkend.

Vorliegend kann vorgesehen sein, dass die Zeitspanne eine relativ große Toleranz aufweist, beispielsweise einen Bereich von 80 ms bis 120 ms bei einer Zeitspanne von 100 ms, einen Bereich von 130 ms bis 170 ms bei einer Zeitspanne von 150 ms, einen Bereich von 180 ms bis 220 ms bei einer Zeitspanne von 200 ms, einen Bereich von 230 ms bis 270 ms bei einer Zeitspanne von 250 ms und einen Bereich von 280 ms bis 320 ms bei einer Zeitspanne von 300 ms. Andere Toleranzen wie beispielsweise 10 ms, 15 ms oder 25 ms können ebenfalls vorgesehen sein.

Neben einer Temperatur kann als intendierter Zielparameter auch vorgesehen sein, dass eine Funktion aktiviert oder deaktiviert wird. Eine solche Funktion umfasst beispielsweise Servicehilfen wie eine blinkende LED, welche hierfür jedoch in keiner Weise beschränkend ist.

Vorzugsweise ist die zweite Vorrichtung dazu eingerichtet, die zu übertragende Energie zu reduzieren. Auf diese Weise kann die zweite Vorrichtung eine Information an die erste Vorrichtung übertragen, wodurch eine bidirektionale Kommunikation geschaffen wird. Dies wird dadurch erreicht, dass ein Wirkstrom im primären Resonanzkreis kleiner und daher eine Spannung an einem in der ersten Vorrichtung vorgesehenen Shunt weniger wird, wenn die als Empfänger agierende zweite Vorrichtung die empfangene Energie reduziert.

In einer bevorzugten Ausgestaltung umfasst die zweite Vorrichtung dazu eine Resonanzkontrollvorrichtung, welche dazu eingerichtet ist, im sekundären Resonanzkreis wenigstens einen resonanzbestimmenden Kondensator zuzuschalten oder wegzuschalten, um einen Wirkstrom im primären Resonanzkreis zu reduzieren. Eine empfangene Energie wird so mittels Änderns der Resonanz des sekundärseitigen Resonanzkreises und nicht durch ein Ändern einer Last reduziert. Dies ist insbesondere vorteilhaft, da ein Verändern der sekundärseitigen Resonanz (im Gegensatz zur Verwendung einer "Dummy-Last") keine Verlustleistung während einer Kommunikation erzeugt. Zudem wird die Last auch während der Kommunikation mit (etwas reduzierter) Energie versorgt.

Vorteilhafterweise umfasst die erste Vorrichtung eine Messvorrichtung mit einem Shunt, welche dazu eingerichtet ist, einen Spannungsabfall am Shunt zu detektieren. Die zweite Vorrichtung kann somit eine empfangene Energie reduzieren und dadurch die Leistung für die Last bzw. Sitzringheizung regeln, ohne dass Wirkleistungsverluste (z.B. in Bezug auf die Temperaturregelung der Sitzringheizung) entstehen.

Vorzugsweise ist die Messvorrichtung der als Sender agierenden ersten Vorrichtung dazu eingerichtet, einen absoluten Wert und/oder eine Dauer des Spannungsabfalls zu bestimmen. Auf diese Weise kann die erste Vorrichtung beispielsweise ermitteln, dass die als Empfänger agierende zweite Vorrichtung das Erreichen einer Solltemperatur und/oder das Auftreten eines bestimmten empfängerseitig aufgetretenen Fehlers meldet. Senderseitig kann ferner eine Datenstruktur - z.B. eine Tabelle - vorgehalten sein, in welcher entsprechende Rückmeldungen bzw. Fehlercodes einem Wert und/oder einer Dauer eines Spannungsabfalls zugeordnet sind.

Die vorgenannte Aufgabe wird erfindungsgemäß weiterhin gelöst durch ein Energieübertragungssystem für eine Sanitäreinrichtung, insbesondere für eine Toilette, umfassend eine erste Vorrichtung mit einem primären Resonanzkreis und eine zweite Vorrichtung mit einem sekundären Resonanzkreis, welcher mit dem primären Resonanzkreis gekoppelt und zum drahtlosen Empfang von Energie, welche zum Betrieb eines Verbrauchers vorgesehen ist, eingerichtet ist. Dabei umfasst die zweite Vorrichtung eine Resonanzkontrollvorrichtung, welche dazu eingerichtet ist, im sekundären Resonanzkreis wenigstens einen resonanzbestimmenden Kondensator zuzuschalten oder wegzuschalten, um einen Wirkstrom im primären Resonanzkreis zu reduzieren.

Auf diese Weise kann durch die erfindungsgemäße Lösung eine unidirektionale Informationsübertragung von der als Sender agierenden zweiten Vorrichtung zu der als Empfänger agierenden ersten Vorrichtung erreicht werden, da eine empfangene Energie mittels Änderns der Resonanz des sekundärseitigen Resonanzkreises und nicht durch ein Ändern einer Last reduziert wird, wodurch keine Verlustleistung während einer Kommunikation erzeugt wird. Eine separate Kommunikationsschaltung, beispielsweise zwecks Kommunikation von einem Toilettensitz zu einer Toilettenschüssel, ist demnach nicht notwendig.

Die erste Vorrichtung, welche vorliegend als Empfänger von Informationen agiert, kann beispielsweise als Toilettenschüssel ausgebildet sein. Die zweite Vorrichtung, welche entsprechend als Sender von Informationen agiert, kann beispielsweise als Toilettensitz ausgebildet sein. Als Sender von Informationen können beispielsweise in und/oder an einem WC-Sitz angeordnete Sensoren vorgesehen sein, welche Benutzerinformationen wie Gewicht und weitere physiologische Daten erfassen.

Vorzugsweise umfasst die erste Vorrichtung eine Messvorrichtung mit einem Shunt, welche dazu eingerichtet ist, einen Spannungsabfall am Shunt zu detektieren. Der als Sender agierende Toilettensitz kann somit eine Energie reduzieren und dadurch eine entsprechende Leistung für die Last bzw. den Verbraucher regeln, ohne dass Wirkleistungsverluste entstehen.

Die vorgenannte Aufgabe wird erfindungsgemäß ferner gelöst durch eine Sanitäreinrichtung, insbesondere eine Toilette, umfassend eine Toilettenschüssel und einen Toilettensitz sowie ein Energieübertragungssystem gemäß den vorstehenden Erläuterungen, wobei eine erste Vorrichtung in oder an der Toilettenschüssel angeordnet ist, beispielsweise in eine Komponente der Toilettenschüssel integriert, und eine zweite Vorrichtung in oder an dem Toilettensitz angeordnet ist. Die bevorzugten Ausführungsbeispiele betreffend das Energieübertragungssystem sind in gleicher Weise für die Sanitäreinrichtung vorgesehen.

Des Weiteren wird die vorgenannte Aufgabe erfindungsgemäß gelöst durch ein Verfahren zur Energieübertragung für eine Sanitäreinrichtung, umfassend: Übertragen von Energie von einem primären Resonanzkreis einer ersten Vorrichtung an einen sekundären Resonanzkreis einer zweiten Vorrichtung, wobei der sekundäre Resonanzkreis mit dem primären Resonanzkreis gekoppelt ist, Ändern, durch die erste Vorrichtung, der an den sekundären Resonanzkreis zu übertragenden Energie für eine vordefinierte Zeitspanne, Ermitteln, durch die zweite Vorrichtung, der Zeitspanne, für welche die übertragene Energie geändert wurde und Bestimmen, durch die zweite Vorrichtung, eines Wertes eines intendierten Zielparameters auf Basis der ermittelten Zeitspanne.

In einer bevorzugten Ausgestaltung umfasst das Verfahren ein Reduzieren der zu übertragenden Energie seitens der ersten Vorrichtung, ein Starten eines Zeitmessers, ein kontinuierliches Überprüfen ob ein aktueller Wert des Zeitmessers einen durch die vordefinierte Zeitspanne festgelegten Wert erreicht hat, ein Beenden des Zeitmessers, und ein Erhöhen der zu übertragenden Energie.

Vorteilhafterweise umfasst das Verfahren ein kontinuierliches Überprüfen der empfangenen Energie seitens der zweiten Vorrichtung, ein Starten eines Zeitmessers bei Feststellung einer negativen Abweichung der empfangenen Energie, ein Beenden des Zeitmessers bei Feststellung einer positiven Abweichung der empfangenen Energie, und ein Ermitteln einer Zeitspanne zwischen Starten des Zeitmessers und Beenden des Zeitmessers.

Weitere Einzelheiten, Merkmale und Vorteile der Erfindung werden anhand der nachfolgenden Ausführungsbeispiele näher erläutert.

### Dabei zeigen:

- Fig. 1: in einer schematischen Übersicht ein erstes Ausführungsbeispiel des erfindungsgemäßen Energieübertragungssystems;
- Fig. 2: in einer schematischen Übersicht ein zweites Ausführungsbeispiel des erfindungsgemäßen Energieübertragungssystems;
- Fig. 3: in einem Ablaufdiagramm ein Ausführungsbeispiel für eine Kommunikation von Sender zu Empfänger entsprechend des erfindungsgemäßen Verfahrens; und
- Fig. 4: in einem Ablaufdiagramm ein Ausführungsbeispiel für eine Kommunikation von Empfänger zu Sender entsprechend des erfindungsgemäßen Verfahrens.

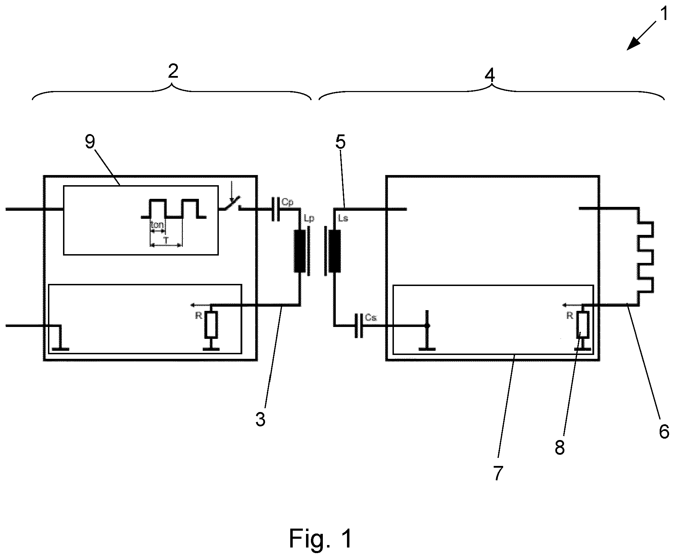

Fig. 1 zeigt in einer schematischen Übersicht ein erstes Ausführungsbeispiel des erfindungsgemäßen Energieübertragungssystems 1. Das Energieübertragungssystem 1 ist für eine Sanitäreinrichtung, beispielsweise für eine Toilette, vorgesehen und umfasst vorliegend eine auch als Sender bezeichnete erste Vorrichtung 2, welche in einer Toilettenschüssel angeordnet sein kann, mit einem primären Resonanzkreis 3. Dieser primäre Resonanzkreis 3 wird von einer Eingangsspannung gespeist, welche beispielsweise im Bereich von 12 Volt bis 48 Volt liegt, vorzugsweise bei 24 Volt.

Des Weiteren umfasst das Energieübertragungssystem 1 eine auch als Empfänger bezeichnete zweite Vorrichtung 4, welche in einem Toilettensitz bzw. in einem Sitzring angeordnet sein kann, und einen sekundären Resonanzkreis 5. Der sekundäre Resonanzkreis 5 wird in Resonanz betrieben und ist mit dem primären Resonanzkreis 3 lose induktiv gekoppelt. Vorliegend kann beispielsweise ein Kopplungsfaktor zwischen primärem Resonanzkreis 3 und sekundärem Resonanzkreis 5 von kleiner 1, beispielsweise k=0.3, gegeben sein. Der sekundäre Resonanzkreis 5 ist zum drahtlosen Empfang von Energie eingerichtet, welche zum Betrieb eines Verbrauchers 6 (beispielsweise einer Sitzringheizung, auch als Sitzheizung bezeichnet) vorgesehen ist. Dieser stellt dabei eine ohmsche Last dar.

Die vorgenannte Anordnung stellt im Wesentlichen einen DC-DC-Converter bzw. -Wandler dar (mit Isolationsbarriere zur Erreichung eines vollständigen elektrischen Trennungsbereichs zwischen Eingangs- und Ausgangsseite), welcher auch als LLC-Converter (neben der Primärspule L des Transformators sind eine weitere Spule L und ein Kondensator C vorgesehen) oder als Wireless Power Transfer-Converter (WPT-Converter) bezeichnet werden kann.

Erfindungsgemäß ist vorgesehen, dass der Sender 2 dazu eingerichtet ist, eine an den sekundären Resonanzkreis 5 zu übertragende Energie für eine vordefinierte Zeitspanne zu ändern, insbesondere zu reduzieren. Hierzu umfasst der Sender 2 eine Steuerungsvorrichtung 9, die dazu eingerichtet ist, die dem Sender 2 bereitgestellte Eingangsspannung mittels Pulsdauermodulation (PDM) zu takten, beispielsweise auf eine Frequenz von 100 kHz. Mittels Änderung des Tastgrades der PDM kann die Steuerungsvorrichtung 9 die an den sekundären Resonanzkreis 5 zu übertragende Energie anpassen, d.h. es kann durch eine Verringerung des Tastgrades eine proportionale Verringerung der zu übertragenden Energie erfolgen. Eine solche Verringerung der zu übertragenden Energie erfolgt temporär. Der Empfänger 4 ist entsprechend dazu eingerichtet, anhand der Zeitspanne, für welche die übertragene Energie seitens des Senders 2 geändert wurde, einen Wert eines intendierten Zielparameters zu bestimmen. Beispielsweise kann vorgesehen sein, dass der intendierte Zielparameter eine für die als Verbraucher fungierende Sitzringheizung 6 gewünschte Temperatur betrifft und dass eine Reduktion der zu übertragenden Energie für eine Zeitspanne von 150 ms bedeutet, dass diese gewünschte Temperatur 30 °C beträgt.

Zu diesem Zweck umfasst der Empfänger 4 eine Messvorrichtung 7 mit einem Shunt 8, mittels welchem eine Änderung der an die Sitzringheizung 6 abgegebenen Energie während der vordefinierten Zeitspanne messbar ist. Mit anderen Worten kann eine an die als Last fungierende Sitzringheizung 6 übertragene Energie im Sender 2 mit einer PDM der resonanten Übertragungsfrequenz beeinflusst werden. Dadurch wird der primäre Resonanzkreis 3 in Resonanz betrieben, wodurch nur ein Wirkstrom fließt, der am Shunt 8 eine Spannung proportional zum Wirkstrom und entsprechend zum Laststrom erzeugt.

Mit dem Energieübertragungssystem 1 gemäß erstem Ausführungsbeispiel ist eine Kommunikation von Sender 2 zu Empfänger 4 möglich.

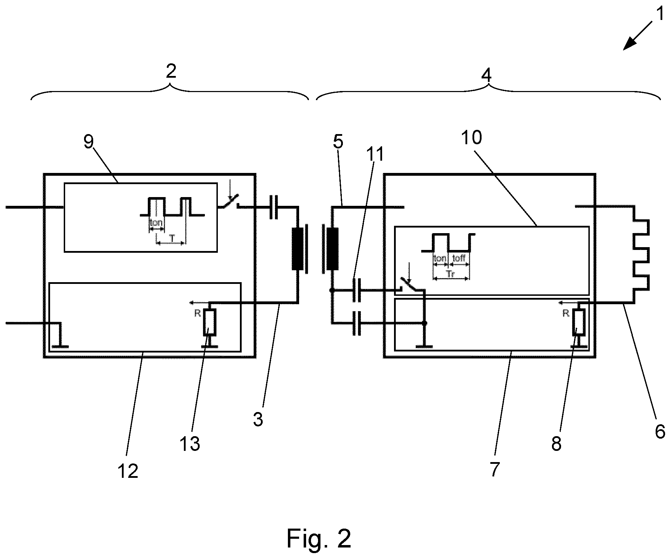

Fig. 2 zeigt in einer schematischen Übersicht ein zweites Ausführungsbeispiel des erfindungsgemäßen Energieübertragungssystems 1, welches ebenfalls eine auch als Sender bezeichnete erste Vorrichtung 2 und eine auch als Empfänger bezeichnete zweite Vorrichtung 4 umfasst.

Vorliegend ist in der zweiten Vorrichtung 4 zusätzlich eine Resonanzkontrollvorrichtung 10 vorgesehen, welche dazu eingerichtet ist, im sekundären Resonanzkreis 5 wenigstens einen resonanzbestimmenden Kondensator 11 zuzuschalten oder wegzuschalten. Auf diese Weise kann ein Wirkstrom im primären Resonanzkreis 3 reduziert werden. Hierzu ist senderseitig ferner eine Messvorrichtung 12 mit einem Shunt 13 vorgesehen, welche dazu eingerichtet ist, einen Spannungsabfall am Shunt 13 zu detektieren. Dadurch, dass die zweite Vorrichtung 4 eine Resonanzkontrollvorrichtung 10 umfasst, welche die von der ersten Vorrichtung 2 übertragene Energie für eine vordefinierte Zeitspanne absenken kann, wird beispielsweise das Erreichen eines Zielparameters an die erste Vorrichtung 2 übermittelt.

Mit anderen Worten kann der Empfänger 4 eine Information an den Sender 2 übertragen, indem er die empfangene Energie reduziert. Wenn der Empfänger 4 die empfangene Energie reduziert, wird der Wirkstrom im primären Resonanzkreis 3 kleiner und entsprechend wird auch eine Spannung am Shunt 13 kleiner.

Vorliegend kann die Messvorrichtung 12 des Senders 2 im Rahmen der auf diese Weise erfolgenden Strommessung eine absolute Stromstärke und/oder (bei einem temporären Absenken der gesendeten Energie durch den Empfänger 4) eine Zeitspanne auswerten. Der Empfänger 4 reduziert die vom Sender 2 empfangene Energie demnach, indem er den sekundärseitigen Resonanzkreis 5 verändert. Somit wird die empfangene Energie mit Ändern der Resonanz des sekundärseitigen Resonanzkreises 5 und nicht durch Ändern einer Last reduziert. Wie vorstehend erläutert, verändert der Empfänger 4 hierzu den sekundärseitigen Resonanzkreis 5 durch ein Zu- oder Wegschalten wenigstens eines resonanzbestimmenden Kondensators 11.

Durch das zusätzliche Vorsehen einer empfängerseitigen Resonanzkontrollvorrichtung 10 kann der Empfänger 4 somit auch Informationen an den Sender 2 übermitteln, wodurch eine bidirektionale Kommunikation ermöglicht wird.

Obschon vorliegend in Bezug auf Fig. 2 die in der als Empfänger agierenden zweiten Vorrichtung 4 vorgesehene Resonanzkontrollvorrichtung 10 zusätzlich zu der Funktionalität in der ersten Vorrichtung 2 gegeben ist, ist dies für die vorliegende Erfindung nicht beschränkend.

Gleichermaßen kann auch vorgesehen sein, dass die erste Vorrichtung 2 nicht dazu eingerichtet ist, eine an den sekundären Resonanzkreis 5 zu übertragende Energie für eine vordefinierte Zeitspanne zu ändern, und die zweite Vorrichtung 4 nicht dazu eingerichtet ist, anhand dieser Zeitspanne, für welche die übertragene Energie geändert wurde, einen Wert eines intendierten Zielparameters zu bestimmen. Stattdessen kann - ohne diese Merkmale - lediglich vorgesehen sein, dass die zweite Vorrichtung 4 eine Resonanzkontrollvorrichtung 10 umfasst, welche dazu eingerichtet ist, im sekundären Resonanzkreis 5 wenigstens einen resonanzbestimmenden Kondensator 11 zuzuschalten oder wegzuschalten, um einen Wirkstrom im primären Resonanzkreis 3 zu reduzieren. In einem solchen Fall könnte die erste Vorrichtung 2 als Empfänger und die zweite Vorrichtung 4 als Sender bezeichnet werden, wobei von der zweiten Vorrichtung 4 zu der ersten Vorrichtung 2 eine unidirektionale Kommunikation erfolgt.

Eine solche unidirektionale Kommunikation von der zweiten Vorrichtung 4 zu der ersten Vorrichtung 2 erfolgt unter der Voraussetzung, dass ein Wirkstrom im primären Resonanzkreis gegeben ist.

Sobald ein Wirkstrom im primären Resonanzkreis 3 gegeben ist, kann eine Übertragung von Informationen von zweiter Vorrichtung 4 zu erster Vorrichtung 2 erfolgen. Als Auslöseereignis für eine Versorgung mit einem Wirkstrom kann eine Personen- bzw. Benutzererkennung vorgesehen sein, welche von einem Näherungssensor der Toilettenschüssel ausgeführt wird. So wird bei Erkennung einer Person bzw. eines Benutzers der primäre Resonanzkreis mit Strom versorgt. Anschließend wird die zweite Vorrichtung 4 von der ersten Vorrichtung 2 durch das Übertragen von Energie gestartet bzw. aufgeweckt. Die erste Vorrichtung 2 beginnt zu diesem Zeitpunkt mit der Messung des Spannungsabfalls am Shunt in der ersten Vorrichtung 2. Senkt die zweite Vorrichtung 4 nun den Wirkstrom für eine vordefinierte Zeit, so kann die erste Vorrichtung 2 die Zeitdauer der Wirkstromabsenkung messen. Auf diese Weise kann eine unidirektionale Kommunikation von der zweiten Vorrichtung 4 zur ersten Vorrichtung 2 erfolgen.

Die vorbeschriebene unidirektionale Kommunikation erfolgt beispielsweise zu vordefinierten Zeitpunkten. Alternativ oder zusätzlich kann vorgesehen sein, dass eine solche unidirektionale Kommunikation nach einem Ereignis erfolgt, welches mittels eines in oder an der zweiten Vorrichtung 4 vorgesehenen Sensors (nicht dargestellt) detektiert wird.

Entsprechend der vorstehend beschriebenen Art und Weise kann das erste Absenken auch als Startbit für eine Folge von beispielsweise weiteren acht Absenkungen in einem vorgegeben Zeitraster erfolgen. So kann ein Byte (1 Byte = 8 Bits ≙ 8 Absenkungen) übertragen werden.

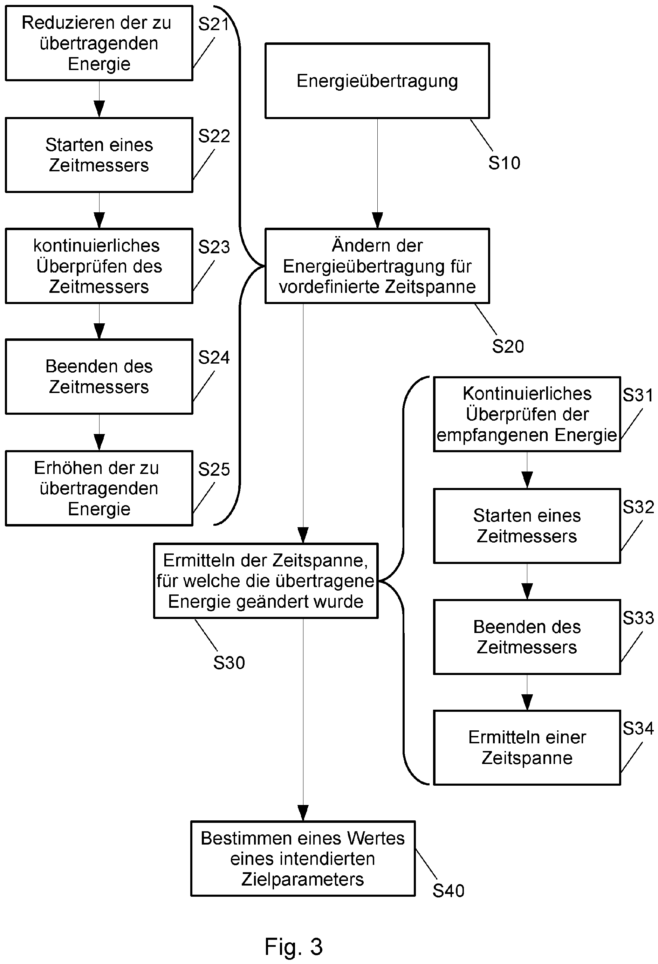

Fig. 3 zeigt in einem Ablaufdiagramm ein Ausführungsbeispiel für eine Kommunikation von einer auch als Sender bezeichneten ersten Vorrichtung 2 zu einer auch als Empfänger bezeichneten zweiten Vorrichtung 4 entsprechend des erfindungsgemäßen Verfahrens.

In einem ersten Verfahrensschritt S10 des Verfahrens zur Energieübertragung für eine Sanitäreinrichtung erfolgt ein Übertragen von Energie von einem primären Resonanzkreis 3 eines Senders 2 an einen sekundären Resonanzkreis 5 eines Empfängers 4, wobei der sekundäre Resonanzkreis 5 mit dem primären Resonanzkreis 3 gekoppelt ist. Die zu übertragende Energie kann beispielsweise einer Energieversorgung für den Betrieb eines Verbrauchers 6 (z.B einer Sitzringheizung) dienen, welcher in einem Toilettensitz vorgesehen ist.

Die Energieübertragung in Verfahrensschritt S10 ist im Wesentlichen konstant. Beispielsweise kann vorgesehen sein, dass eine an den Sender 2 bereitgestellte Eingangsspannung mittels PDM auf z.B. 100 kHz getaktet und an den primären Resonanzkreis 3 angeschaltet wird. Im primären Resonanzkreis 3 des Senders 2 fließt somit ein sinusförmiger Wirkstrom, wenn am lose gekoppelten sekundären Resonanzkreis 5 des Empfängers 4 eine ohmsche Last, z.B. eine Sitzringheizung 6, vorgesehen ist.

Anschließend ist in einem zweiten Verfahrensschritt S20 vorgesehen, dass der Sender 2 die an den sekundären Resonanzkreis 5 zu übertragende Energie für eine vordefinierte Zeitspanne ändert, beispielsweise reduziert.

Diese temporäre bzw. zeitweise Änderung umfasst beispielsweise ein Reduzieren der vom Sender 2 zu übertragenden Energie in einem Verfahrensschritt S21 für die vordefinierte Zeitspanne. Hierzu wird in Verfahrensschritt S22 ein Zeitmesser gestartet, der senderseitig gemäß Verfahrensschritt S23 kontinuierlich überprüft wird und zwar solange, bis ein aktueller Wert des Zeitmessers einen durch die vordefinierte Zeitspanne festgelegten Wert erreicht hat. Anschließend wird der Zeitmesser in Verfahrensschritt S24 beendet, woraufhin in Verfahrensschritt S25 die zu übertragende Energie wieder - entsprechend ihrer ursprünglichen Höhe in Verfahrensschritt S10 - erhöht wird.

Empfängerseitig erfolgt gemäß Verfahrensschritt S30 ein Ermitteln der Zeitspanne, für welche die übertragene Energie geändert wurde. Dieser Prozess läuft zumindest teilweise zeitlich parallel zu dem Verfahrensschritt S20 ab, in welchem der Sender 2 die an den sekundären Resonanzkreis 5 zu übertragende Energie für eine vordefinierte Zeitspanne ändert. Vorgesehen ist hierzu insbesondere ein kontinuierliches Überprüfen der empfangenen Energie seitens des Empfängers 4 gemäß Verfahrensschritt S31. Stellt der Empfänger 4 fest, dass eine negative Abweichung der empfangenen Energie vorliegt, wird in Verfahrensschritt S32 ein Zeitmesser gestartet. Das kontinuierliche Überprüfen der empfangenen Energie seitens des Empfängers 4 erfolgt weiter.

Stellt der Empfänger 4 anschließend eine positive Abweichung der empfangenen Energie fest, so ist daraus ableitbar, dass die temporäre Verringerung des Energieniveaus wieder beendet wird. In Verfahrensschritt S33 kann der Zeitmesser entsprechend beendet werden. Auf Basis des Zeitpunktes zu welchem der Zeitmesser gestartet wurde und des Zeitpunktes zu welchem der Zeitmesser beendet wurde, kann empfängerseitig in Verfahrensschritt S34 eine Zeitspanne ermittelt werden, beispielsweise eine Zeitspanne von 200 ms.

Diese ermittelte Zeitspanne dient anschließend in Verfahrensschritt S40 dazu, empfängerseitig einen Wert eines intendierten Zielparameters zu bestimmen. Beispielsweise kann vorgesehen sein, dass der intendierte Zielparameter eine für die Sitzringheizung 6 gewünschte Temperatur betrifft und dass eine Messung einer Zeitspanne von 200 ms bedeutet, dass die gewünschte Temperatur 32 °C beträgt. Diese Information wird von Sender 2 zu Empfänger 4 übermittelt.

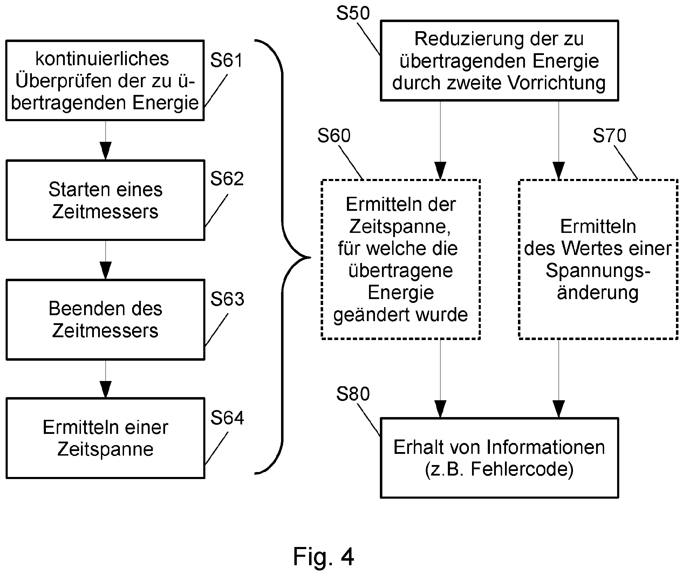

Fig. 4 zeigt in einem Ablaufdiagramm ein Ausführungsbeispiel für eine Kommunikation von einer auch als Empfänger bezeichneten zweiten Vorrichtung 4 zu einer auch als Sender bezeichneten ersten Vorrichtung 2 entsprechend des erfindungsgemäßen Verfahrens.

In einem ersten Verfahrensschritt S50 ist zunächst vorgesehen, dass der Empfänger 4 dem Sender 2 mitteilt, dass eine zu übertragende Energie zu reduzieren ist. Hierzu ist empfängerseitig eine Resonanzkontrollvorrichtung 10 vorgesehen, mittels welcher im sekundären Resonanzkreis 5 wenigstens ein resonanzbestimmender Kondensator 11 zugeschaltet oder weggeschaltet wird, um einen Wirkstrom im primären Resonanzkreis 3 zu reduzieren.

Der Verfahrensschritt S50 kann beispielsweise zu einem vordefinierten Zeitpunkt erfolgen. Alternativ oder zusätzlich kann vorgesehen sein, dass der Verfahrensschritt S50 nach einem Ereignis erfolgt bzw. ausgelöst wird, welches mittels eines in oder an der zweiten Vorrichtung 4 vorgesehenen Sensors detektiert wird. Auf diese Weise können von der zweiten Vorrichtung 4 Informationen an die erste Vorrichtung 2 übermittelt werden, auch unabhängig davon, ob zuvor Informationen von der ersten Vorrichtung 2 an die zweite Vorrichtung 4 gesendet wurden.

Der Verfahrensschritt S50 kann des Weiteren jedoch auch in Reaktion darauf vorgesehen sein, dass dem Empfänger 4 vom Sender 2 eine gewünschten Temperaturstufe für eine Sitzringheizung 6 erfolgreich mitgeteilt wurde. Mit anderen Worten kann eine Kommunikation von Empfänger 4 zu Sender 2 in einem solchen Fall einer Bestätigung dienen. Ferner kann vorgesehen sein, dass bei einem empfängerseitigen Erkennen von Fehlern bzw. Problemen mit einer Last, beispielsweise der Sitzringheizung 6, vordefinierte Fehlercodes an den Sender 2 gemeldet werden.

Gemäß Verfahrensschritt S60 ist hierzu seitens des Senders 2 ein Ermitteln der Zeitspanne, für welche die empfangene Energie seitens des Empfängers 4 geändert wurde, vorgesehen. Hierzu wird gemäß Verfahrensschritt S61 ein kontinuierliches Überprüfen der zu übertragenden Energie vorgesehen, um auf diese Weise zu erkennen, ob empfängerseitig - durch Nutzung der Resonanzkontrollvorrichtung 10 - Einfluss auf einen Wirkstrom im primären Resonanzkreis 3 genommen wurde. Explizit ausgenommen von einer solchen Erkennung sind Fälle, in denen der Sender 2 selbst eine temporäre Änderung der zu übertragenden Energie zu verantworten hat, um Informationen an den Empfänger 4 zu übermitteln. Zur Ermittlung des Spannungsabfalls umfasst eine Messvorrichtung 12 des Senders 2 einen Shunt 13, welcher eine entsprechende Detektion ermöglicht.

Sobald der Sender 2 festgestellt hat, dass eine Änderung hinsichtlich der an den Empfänger 4 zu übertragenden Energie vorliegt, welche der Sender 2 selbst nicht veranlasst hat, wird gemäß Verfahrensschritt S62 ein Zeitmesser gestartet. Die zu übertragende Energie wird senderseitig weiter kontinuierlich überwacht.

Stellt der Sender 2 fest, dass die zu übertragende Energie sich wieder erhöht, um letztlich auf das ursprüngliche Energieniveau zurückzukehren, so wird in Verfahrensschritt S63 der Zeitmesser beendet. Auf Basis des Zeitpunktes zu welchem der Zeitmesser gestartet wurde, und des Zeitpunktes zu welchem der Zeitmesser beendet wurde, kann senderseitig in Verfahrensschritt S64 eine Zeitspanne ermittelt werden.

Alternativ oder zusätzlich kann gemäß Verfahrensschritt S70 vorgesehen sein, dass senderseitig mittels der Messvorrichtung 12 der absolute Wert einer Spannungsänderung ermittelt wird. Die in Verfahrensschritt S60 ermittelte Zeitspanne und/oder die in Verfahrensschritt S70 ermittelte Spannungsänderung dient anschließend in Verfahrensschritt S80 dazu, dass der Sender 2 Informationen erhalten kann, welche ihm der Empfänger 4 mitteilte.

Durch Kombination von Zeitspanne und Spannungsänderung kann eine größere Anzahl unterschiedlicher Informationen (I₁ bis I₂₅) übermittelt werden, was in der nachfolgenden Tabelle exemplarisch dargestellt ist:

| | -0.1 V | -0.2 V | -0.3 V | -0.4 V | -0.5 V |
|---|---|---|---|---|---|
| 100 ms | I₁ | I₂ | I₃ | I₄ | I₅ |
| 150 ms | I₆ | I₇ | I₈ | I₉ | I₁₀ |
| 200 ms | I₁₁ | 112 | 113 | 114 | 115 |
| 250 ms | 116 | 117 | 118 | I₁₉ | I₂₀ |
| 300 ms | I₂₁ | I₂₂ | I₂₃ | I₂₄ | I₂₅ |

Demnach können beispielsweise durch Kombination von fünf unterschiedlichen Zeitspannen und fünf unterschiedlichen Spannungsreduktionen 25 verschiedene Informationen, wie Rückmeldungen des Empfängers 4 oder vordefinierte Fehlercodes, an den Sender 2 übermittelt werden.

Es kann ebenfalls vorgesehen sein, dass mehrere zeitlich nacheinander geschaltete, gleiche Spannungsreduktionen zu einer Information formiert werden.

Die vorstehend beschriebenen Figuren und die im Zusammenhang mit diesen erläuterten Ausführungsbeispiele dienen lediglich einer Erläuterung der Erfindung und sind für diese nicht beschränkend.

### Bezugszeichenliste:

- 1: Energieübertragungssystem
- 2: erste Vorrichtung, z.B. Sender
- 3: primärer Resonanzkreis
- 4: zweite Vorrichtung, z.B. Empfänger
- 5: sekundärer Resonanzkreis
- 6: Verbraucher als Last, z.B. Sitzringheizung
- 7: Messvorrichtung der zweiten Vorrichtung
- 8: Shunt
- 9: Steuerungsvorrichtung der ersten Vorrichtung
- 10: Resonanzkontrollvorrichtung der zweiten Vorrichtung
- 11: resonanzbestimmender Kondensator
- 12: Messvorrichtung der ersten Vorrichtung
- 13: Shunt

- S10: Verfahrensschritt (erste Vorrichtung)
- S20 - S25: Verfahrensschritt (erste Vorrichtung)
- S30 - S34: Verfahrensschritt (zweite Vorrichtung)
- S40: Verfahrensschritt (zweite Vorrichtung)
- S50: Verfahrensschritt (zweite Vorrichtung)
- S60 - S64: Verfahrensschritt (erste Vorrichtung)
- S70: Verfahrensschritt (erste Vorrichtung)
- S80: Verfahrensschritt (erste Vorrichtung)

## Patentansprüche

1. Energieübertragungssystem (1) für eine Sanitäreinrichtung, insbesondere für eine Toilette, umfassend
- eine erste Vorrichtung (2) mit einem primären Resonanzkreis (3), und
- eine zweite Vorrichtung (4) mit einem sekundären Resonanzkreis (5), welcher mit dem primären Resonanzkreis (3) gekoppelt und zum drahtlosen Empfang von Energie, welche zum Betrieb eines Verbrauchers (6) vorgesehen ist, eingerichtet ist,
wobei die erste Vorrichtung (2) dazu eingerichtet ist, eine an den sekundären Resonanzkreis (5) zu übertragende Energie für eine vordefinierte Zeitspanne zu ändern, und
die zweite Vorrichtung (4) dazu eingerichtet ist, anhand der Zeitspanne, für welche die übertragene Energie geändert wurde, einen Wert eines intendierten Zielparameters zu bestimmen.

2. Energieübertragungssystem (1) nach Anspruch 1, wobei eine Änderung der zu übertragenden Energie für die vordefinierte Zeitspanne ein Reduzieren der zu übertragenden Energie umfasst.

3. Energieübertragungssystem (1) nach Anspruch 1 oder Anspruch 2, wobei die zweite Vorrichtung (4) eine Messvorrichtung (7) mit einem Shunt (8) umfasst, mittels welchem eine Änderung der an den Verbraucher (6) abgegebenen Energie während der vordefinierten Zeitspanne messbar ist.

4. Energieübertragungssystem (1) nach einem der Ansprüche 1 bis 3, wobei die erste Vorrichtung (2) eine Steuerungsvorrichtung (9) umfasst, die dazu eingerichtet ist, eine der ersten Vorrichtung (2) bereitgestellte Eingangsspannung mittels Pulsdauermodulation, PDM, zu takten.

5. Energieübertragungssystem (1) nach Anspruch 4, wobei die Steuerungsvorrichtung (9) dazu eingerichtet ist, die an den sekundären Resonanzkreis (5) zu übertragende Energie mittels Änderung des Tastgrades der PDM anzupassen.

6. Energieübertragungssystem (1) nach einem der Ansprüche 1 bis 5, wobei die erste Vorrichtung (2) einen Zeitmesser umfasst, mittels welchem die vordefinierte Zeitspanne steuerbar ist.

7. Energieübertragungssystem (1) nach Anspruch 6, wobei der Zeitmesser zur Steuerung einer Vielzahl vordefinierter Zeitspannen eingerichtet ist, welche unterschiedlichen Werten des intendierten Zielparameters zugeordnet sind.

8. Energieübertragungssystem (1) nach Anspruch 7, wobei für die Vielzahl vordefinierter Zeitspannen Werte im Bereich von 100-300 ms, insbesondere 100 ms, 150 ms, 200 ms, 250 ms und 300 ms, vorgesehen sind.

9. Energieübertragungssystem (1) nach einem der Ansprüche 1 bis 8, wobei die zweite Vorrichtung (4) dazu eingerichtet ist, die zu übertragende Energie zu reduzieren.

10. Energieübertragungssystem (1) für eine Sanitäreinrichtung, insbesondere für eine Toilette, umfassend
- eine erste Vorrichtung (2) mit einem primären Resonanzkreis (3), und
- eine zweite Vorrichtung (4) mit einem sekundären Resonanzkreis (5), welcher mit dem primären Resonanzkreis (3) gekoppelt und zum drahtlosen Empfang von Energie, welche zum Betrieb eines Verbrauchers (6) vorgesehen ist, eingerichtet ist,
wobei die zweite Vorrichtung (4) eine Resonanzkontrollvorrichtung (10) umfasst, welche dazu eingerichtet ist, im sekundären Resonanzkreis (5) wenigstens einen resonanzbestimmenden Kondensator (11) zuzuschalten oder wegzuschalten, um einen Wirkstrom im primären Resonanzkreis (3) zu reduzieren.

11. Energieübertragungssystem (1) nach Anspruch 10, wobei die erste Vorrichtung (2) eine Messvorrichtung (12) mit einem Shunt (13) umfasst, welche dazu eingerichtet ist, einen Spannungsabfall am Shunt (13) zu detektieren.

12. Sanitäreinrichtung, insbesondere Toilette, umfassend eine Toilettenschüssel und einen Toilettensitz sowie ein Energieübertragungssystem (1) gemäß einem der Ansprüche 1 bis 11, wobei die erste Vorrichtung (2) in oder an der Toilettenschüssel angeordnet ist und die zweite Vorrichtung (4) in oder an dem Toilettensitz angeordnet ist.

13. Verfahren zur Energieübertragung für eine Sanitäreinrichtung, umfassend:
- Übertragen (S10) von Energie von einem primären Resonanzkreis (3) einer ersten Vorrichtung (2) an einen sekundären Resonanzkreis (5) einer zweiten Vorrichtung (4), wobei der sekundäre Resonanzkreis (5) mit dem primären Resonanzkreis (3) gekoppelt ist,
- Ändern (S20), durch die erste Vorrichtung (2), der an den sekundären Resonanzkreis (5) zu übertragenden Energie für eine vordefinierte Zeitspanne,
- Ermitteln (S30), durch die zweite Vorrichtung (4), der Zeitspanne, für welche die übertragene Energie geändert wurde, und
- Bestimmen (S40), durch die zweite Vorrichtung (4), eines Wertes eines intendierten Zielparameters auf Basis der ermittelten Zeitspanne.

14. Verfahren nach Anspruch 13, ferner umfassend
- Reduzieren (S21) der zu übertragenden Energie seitens der ersten Vorrichtung (2),
- Starten (S22) eines Zeitmessers,
- kontinuierliches Überprüfen (S23), ob ein aktueller Wert des Zeitmessers einen durch die vordefinierte Zeitspanne festgelegten Wert erreicht hat,
- Beenden (S24) des Zeitmessers, und
- Erhöhen (S25) der zu übertragenden Energie.

15. Verfahren nach Anspruch 13 oder Anspruch 14, ferner umfassend:
- kontinuierliches Überprüfen (S31) der empfangenen Energie seitens der zweiten Vorrichtung (4),
- Starten (S32) eines Zeitmessers bei Feststellung einer negativen Abweichung der empfangenen Energie,
- Beenden (S33) des Zeitmessers bei Feststellung einer positiven Abweichung der empfangenen Energie, und
- Ermitteln (S34) einer Zeitspanne zwischen Starten des Zeitmessers und Beenden des Zeitmessers.

## Geänderte Patentansprüche

### Geänderte Patentansprüche gemäss Regel 137(2) EPÜ.

**1.** Sanitäreinrichtung, insbesondere Toilette, umfassend eine Toilettenschüssel, einen Toilettensitz und ein Energieübertragungssystem (1), das Energieübertragungssystem (1) umfassend:
- eine erste Vorrichtung (2), welche in oder an der Toilettenschüssel angeordnet ist, mit einem primären Resonanzkreis (3), und
- eine zweite Vorrichtung (4), welche in oder an dem Toilettensitz angeordnet ist, mit einem sekundären Resonanzkreis (5), welcher mit dem primären Resonanzkreis (3) gekoppelt und zum drahtlosen Empfang von Energie, welche zum Betrieb eines Verbrauchers (6) vorgesehen ist, eingerichtet ist,
wobei die erste Vorrichtung (2) dazu eingerichtet ist, eine an den sekundären Resonanzkreis (5) zu übertragende Energie für eine vordefinierte Zeitspanne zu ändern, und
die zweite Vorrichtung (4) dazu eingerichtet ist, anhand der Zeitspanne, für welche die übertragene Energie geändert wurde, einen Wert eines intendierten Zielparameters zu bestimmen.

**2.** Sanitäreinrichtung nach Anspruch 1, wobei eine Änderung der zu übertragenden Energie für die vordefinierte Zeitspanne ein Reduzieren der zu übertragenden Energie umfasst.

**3.** Sanitäreinrichtung nach Anspruch 1 oder Anspruch 2, wobei die zweite Vorrichtung (4) eine Messvorrichtung (7) mit einem Shunt (8) umfasst, mittels welchem eine Änderung der an den Verbraucher (6) abgegebenen Energie während der vordefinierten Zeitspanne messbar ist.

**4.** Sanitäreinrichtung nach einem der Ansprüche 1 bis 3, wobei die erste Vorrichtung (2) eine Steuerungsvorrichtung (9) umfasst, die dazu eingerichtet ist, eine der ersten Vorrichtung (2) bereitgestellte Eingangsspannung mittels Pulsdauermodulation, PDM, zu takten.

**5.** Sanitäreinrichtung nach Anspruch 4, wobei die Steuerungsvorrichtung (9) dazu eingerichtet ist, die an den sekundären Resonanzkreis (5) zu übertragende Energie mittels Änderung des Tastgrades der PDM anzupassen.

**6.** Sanitäreinrichtung nach einem der Ansprüche 1 bis 5, wobei die erste Vorrichtung (2) einen Zeitmesser umfasst, mittels welchem die vordefinierte Zeitspanne steuerbar ist.

**7.** Sanitäreinrichtung nach Anspruch 6, wobei der Zeitmesser zur Steuerung einer Vielzahl vordefinierter Zeitspannen eingerichtet ist, welche unterschiedlichen Werten des intendierten Zielparameters zugeordnet sind.

**8.** Sanitäreinrichtung nach Anspruch 7, wobei für die Vielzahl vordefinierter Zeitspannen Werte im Bereich von 100-300 ms, insbesondere 100 ms, 150 ms, 200 ms, 250 ms und 300 ms, vorgesehen sind.

**9.** Sanitäreinrichtung nach einem der Ansprüche 1 bis 8, wobei die zweite Vorrichtung (4) dazu eingerichtet ist, die zu übertragende Energie zu reduzieren.

**10.** Sanitäreinrichtung, insbesondere Toilette, umfassend eine Toilettenschüssel, einen Toilettensitz und ein Energieübertragungssystem (1), das Energieübertragungssystem (1) umfassend:
- eine erste Vorrichtung (2), welche in oder an der Toilettenschüssel angeordnet ist, mit einem primären Resonanzkreis (3), und
- eine zweite Vorrichtung (4), welche in oder an dem Toilettensitz angeordnet ist, mit einem sekundären Resonanzkreis (5), welcher mit dem primären Resonanzkreis (3) gekoppelt und zum drahtlosen Empfang von Energie, welche zum Betrieb eines Verbrauchers (6) vorgesehen ist, eingerichtet ist,
wobei die zweite Vorrichtung (4) eine Resonanzkontrollvorrichtung (10) umfasst, welche dazu eingerichtet ist, im sekundären Resonanzkreis (5) wenigstens einen resonanzbestimmenden Kondensator (11) zuzuschalten oder wegzuschalten, um einen Wirkstrom im primären Resonanzkreis (3) zu reduzieren.

**11.** Sanitäreinrichtung nach Anspruch 10, wobei die erste Vorrichtung (2) eine Messvorrichtung (12) mit einem Shunt (13) umfasst, welche dazu eingerichtet ist, einen Spannungsabfall am Shunt (13) zu detektieren.

**12.** Verfahren zur Energieübertragung für eine Sanitäreinrichtung umfassend eine Toilettenschüssel, einen Toilettensitz und ein Energieübertragungssystem (1), umfassend:
- Übertragen (S10) von Energie von einem primären Resonanzkreis (3) einer ersten Vorrichtung (2), welche in oder an der Toilettenschüssel angeordnet ist, an einen sekundären Resonanzkreis (5) einer zweiten Vorrichtung (4), welche in oder an dem Toilettensitz angeordnet ist, wobei der sekundäre Resonanzkreis (5) mit dem primären Resonanzkreis (3) gekoppelt ist,
- Ändern (S20), durch die erste Vorrichtung (2), der an den sekundären Resonanzkreis (5) zu übertragenden Energie für eine vordefinierte Zeitspanne,
- Ermitteln (S30), durch die zweite Vorrichtung (4), der Zeitspanne, für welche die übertragene Energie geändert wurde, und
- Bestimmen (S40), durch die zweite Vorrichtung (4), eines Wertes eines intendierten Zielparameters auf Basis der ermittelten Zeitspanne.

**13.** Verfahren nach Anspruch 12, ferner umfassend
- Reduzieren (S21) der zu übertragenden Energie seitens der ersten Vorrichtung (2),
- Starten (S22) eines Zeitmessers,
- kontinuierliches Überprüfen (S23), ob ein aktueller Wert des Zeitmessers einen durch die vordefinierte Zeitspanne festgelegten Wert erreicht hat,
- Beenden (S24) des Zeitmessers, und
- Erhöhen (S25) der zu übertragenden Energie.

**14.** Verfahren nach Anspruch 12 oder Anspruch 13, ferner umfassend:
- kontinuierliches Überprüfen (S31) der empfangenen Energie seitens der zweiten Vorrichtung (4),
- Starten (S32) eines Zeitmessers bei Feststellung einer negativen Abweichung der empfangenen Energie,
- Beenden (S33) des Zeitmessers bei Feststellung einer positiven Abweichung der empfangenen Energie, und
- Ermitteln (S34) einer Zeitspanne zwischen Starten des Zeitmessers und Beenden des Zeitmessers.

**1.** Sanitäreinrichtung, insbesondere Toilette, umfassend eine Toilettenschüssel, einen Toilettensitz und ein Energieübertragungssystem (1), das Energieübertragungssystem (1) umfassend:
- eine erste Vorrichtung (2), welche in oder an der Toilettenschüssel angeordnet ist, mit einem primären Resonanzkreis (3), und
- eine zweite Vorrichtung (4), welche in oder an dem Toilettensitz angeordnet ist, mit einem sekundären Resonanzkreis (5), welcher mit dem primären Resonanzkreis (3) gekoppelt und zum drahtlosen Empfang von Energie, welche zum Betrieb eines Verbrauchers (6) vorgesehen ist, eingerichtet ist,
wobei die erste Vorrichtung (2) dazu eingerichtet ist, eine an den sekundären Resonanzkreis (5) zu übertragende Energie für eine vordefinierte Zeitspanne zu ändern,
die zweite Vorrichtung (4) dazu eingerichtet ist, anhand der Zeitspanne, für welche die übertragene Energie geändert wurde, einen Wert eines intendierten Zielparameters zu bestimmen, und
wobei die zweite Vorrichtung (4) eine Messvorrichtung (7) mit einem Shunt (8) umfasst, mittels welchem eine Änderung der an den Verbraucher (6) abgegebenen Energie während der vordefinierten Zeitspanne messbar ist.

**2.** Sanitäreinrichtung nach Anspruch 1, wobei eine Änderung der zu übertragenden Energie für die vordefinierte Zeitspanne ein Reduzieren der zu übertragenden Energie umfasst.

**3.** Sanitäreinrichtung nach Anspruch 1 oder Anspruch 2, wobei die erste Vorrichtung (2) eine Steuerungsvorrichtung (9) umfasst, die dazu eingerichtet ist, eine der ersten Vorrichtung (2) bereitgestellte Eingangsspannung mittels Pulsdauermodulation, PDM, zu takten.

**4.** Sanitäreinrichtung nach Anspruch 3, wobei die Steuerungsvorrichtung (9) dazu eingerichtet ist, die an den sekundären Resonanzkreis (5) zu übertragende Energie mittels Änderung des Tastgrades der PDM anzupassen.

**5.** Sanitäreinrichtung nach einem der Ansprüche 1 bis 4, wobei die erste Vorrichtung (2) einen Zeitmesser umfasst, mittels welchem die vordefinierte Zeitspanne steuerbar ist.

**6.** Sanitäreinrichtung nach Anspruch 5, wobei der Zeitmesser zur Steuerung einer Vielzahl vordefinierter Zeitspannen eingerichtet ist, welche unterschiedlichen Werten des intendierten Zielparameters zugeordnet sind.

**7.** Sanitäreinrichtung nach Anspruch 6, wobei für die Vielzahl vordefinierter Zeitspannen Werte im Bereich von 100-300 ms, insbesondere 100 ms, 150 ms, 200 ms, 250 ms und 300 ms, vorgesehen sind.

**8.** Sanitäreinrichtung nach einem der Ansprüche 1 bis 7, wobei die zweite Vorrichtung (4) dazu eingerichtet ist, die zu übertragende Energie zu reduzieren.

**9.** Sanitäreinrichtung, insbesondere Toilette, umfassend eine Toilettenschüssel, einen Toilettensitz und ein Energieübertragungssystem (1), das Energieübertragungssystem (1) umfassend:
- eine erste Vorrichtung (2), welche in oder an der Toilettenschüssel angeordnet ist, mit einem primären Resonanzkreis (3), und
- eine zweite Vorrichtung (4), welche in oder an dem Toilettensitz angeordnet ist, mit einem sekundären Resonanzkreis (5), welcher mit dem primären Resonanzkreis (3) gekoppelt und zum drahtlosen Empfang von Energie, welche zum Betrieb eines Verbrauchers (6) vorgesehen ist, eingerichtet ist,
wobei die zweite Vorrichtung (4) eine Resonanzkontrollvorrichtung (10) umfasst, welche dazu eingerichtet ist, im sekundären Resonanzkreis (5) wenigstens einen resonanzbestimmenden Kondensator (11) zuzuschalten oder wegzuschalten, um einen Wirkstrom im primären Resonanzkreis (3) zu reduzieren, und
wobei die erste Vorrichtung (2) eine Messvorrichtung (12) mit einem Shunt (13) umfasst, welche dazu eingerichtet ist, einen Spannungsabfall am Shunt (13) zu detektieren.

**10.** Verfahren zur Energieübertragung für eine Sanitäreinrichtung umfassend eine Toilettenschüssel, einen Toilettensitz und ein Energieübertragungssystem (1), umfassend:
- Übertragen (S10) von Energie von einem primären Resonanzkreis (3) einer ersten Vorrichtung (2), welche in oder an der Toilettenschüssel angeordnet ist, an einen sekundären Resonanzkreis (5) einer zweiten Vorrichtung (4), welche in oder an dem Toilettensitz angeordnet ist, wobei der sekundäre Resonanzkreis (5) mit dem primären Resonanzkreis (3) gekoppelt ist,
- Ändern (S20), durch die erste Vorrichtung (2), der an den sekundären Resonanzkreis (5) zu übertragenden Energie für eine vordefinierte Zeitspanne,
- Ermitteln (S30), durch die zweite Vorrichtung (4), der Zeitspanne, für welche die übertragene Energie geändert wurde, umfassend Messen einer Änderung der an den Verbraucher (6) abgegebenen Energie während der vordefinierten Zeitspanne durch eine einen Shunt (8) umfassende Messvorrichtung (7) der zweiten Vorrichtung (4), und
- Bestimmen (S40), durch die zweite Vorrichtung (4), eines Wertes eines intendierten Zielparameters auf Basis der ermittelten Zeitspanne.

**11.** Verfahren nach Anspruch 10, ferner umfassend
- Reduzieren (S21) der zu übertragenden Energie seitens der ersten Vorrichtung (2),
- Starten (S22) eines Zeitmessers,
- kontinuierliches Überprüfen (S23), ob ein aktueller Wert des Zeitmessers einen durch die vordefinierte Zeitspanne festgelegten Wert erreicht hat,
- Beenden (S24) des Zeitmessers, und
- Erhöhen (S25) der zu übertragenden Energie.

**12.** Verfahren nach Anspruch 10 oder Anspruch 11, ferner umfassend:
- kontinuierliches Überprüfen (S31) der empfangenen Energie seitens der zweiten Vorrichtung (4),
- Starten (S32) eines Zeitmessers bei Feststellung einer negativen Abweichung der empfangenen Energie,
- Beenden (S33) des Zeitmessers bei Feststellung einer positiven Abweichung der empfangenen Energie, und
- Ermitteln (S34) einer Zeitspanne zwischen Starten des Zeitmessers und Beenden des Zeitmessers.

**1.** Sanitäreinrichtung, insbesondere Toilette, umfassend eine Toilettenschüssel, einen Toilettensitz und ein Energieübertragungssystem (1), das Energieübertragungssystem (1) umfassend:
- eine erste Vorrichtung (2), welche in oder an der Toilettenschüssel angeordnet ist, mit einem primären Resonanzkreis (3), und
- eine zweite Vorrichtung (4), welche in oder an dem Toilettensitz angeordnet ist, mit einem sekundären Resonanzkreis (5), welcher mit dem primären Resonanzkreis (3) gekoppelt und zum drahtlosen Empfang von Energie, welche zum Betrieb eines Verbrauchers (6) vorgesehen ist, eingerichtet ist,
wobei die erste Vorrichtung (2) dazu eingerichtet ist, eine an den sekundären Resonanzkreis (5) zu übertragende Energie für eine vordefinierte Zeitspanne zu ändern,
die zweite Vorrichtung (4) dazu eingerichtet ist, anhand der Zeitspanne, für welche die übertragene Energie geändert wurde, einen Wert eines intendierten Zielparameters zu bestimmen, und
wobei die zweite Vorrichtung (4) eine Messvorrichtung (7) mit einem Shunt (8) umfasst, mittels welchem eine Änderung der an den Verbraucher (6) abgegebenen Energie während der vordefinierten Zeitspanne messbar ist.

**2.** Sanitäreinrichtung nach Anspruch 1, wobei eine Änderung der zu übertragenden Energie für die vordefinierte Zeitspanne ein Reduzieren der zu übertragenden Energie umfasst.

**3.** Sanitäreinrichtung nach Anspruch 1 oder Anspruch 2, wobei die erste Vorrichtung (2) eine Steuerungsvorrichtung (9) umfasst, die dazu eingerichtet ist, eine der ersten Vorrichtung (2) bereitgestellte Eingangsspannung mittels Pulsdauermodulation, PDM, zu takten.

**4.** Sanitäreinrichtung nach Anspruch 3, wobei die Steuerungsvorrichtung (9) dazu eingerichtet ist, die an den sekundären Resonanzkreis (5) zu übertragende Energie mittels Änderung des Tastgrades der PDM anzupassen.

**5.** Sanitäreinrichtung nach einem der Ansprüche 1 bis 4, wobei die erste Vorrichtung (2) einen Zeitmesser umfasst, mittels welchem die vordefinierte Zeitspanne steuerbar ist.

**6.** Sanitäreinrichtung nach Anspruch 5, wobei der Zeitmesser zur Steuerung einer Vielzahl vordefinierter Zeitspannen eingerichtet ist, welche unterschiedlichen Werten des intendierten Zielparameters zugeordnet sind.

**7.** Sanitäreinrichtung nach Anspruch 6, wobei für die Vielzahl vordefinierter Zeitspannen Werte im Bereich von 100-300 ms, insbesondere 100 ms, 150 ms, 200 ms, 250 ms und 300 ms, vorgesehen sind.

**8.** Sanitäreinrichtung nach einem der Ansprüche 1 bis 7, wobei die zweite Vorrichtung (4) dazu eingerichtet ist, die zu übertragende Energie zu reduzieren.

**9.** Verfahren zur Energieübertragung für eine Sanitäreinrichtung umfassend eine Toilettenschüssel, einen Toilettensitz und ein Energieübertragungssystem (1), umfassend:
- Übertragen (S10) von Energie von einem primären Resonanzkreis (3) einer ersten Vorrichtung (2), welche in oder an der Toilettenschüssel angeordnet ist, an einen sekundären Resonanzkreis (5) einer zweiten Vorrichtung (4), welche in oder an dem Toilettensitz angeordnet ist, wobei der sekundäre Resonanzkreis (5) mit dem primären Resonanzkreis (3) gekoppelt ist,
- Ändern (S20), durch die erste Vorrichtung (2), der an den sekundären Resonanzkreis (5) zu übertragenden Energie für eine vordefinierte Zeitspanne,
- Ermitteln (S30), durch die zweite Vorrichtung (4), der Zeitspanne, für welche die übertragene Energie geändert wurde, umfassend Messen einer Änderung der an den Verbraucher (6) abgegebenen Energie während der vordefinierten Zeitspanne durch eine einen Shunt (8) umfassende Messvorrichtung (7) der zweiten Vorrichtung (4), und
- Bestimmen (S40), durch die zweite Vorrichtung (4), eines Wertes eines intendierten Zielparameters auf Basis der ermittelten Zeitspanne.

**10.** Verfahren nach Anspruch 9, ferner umfassend
- Reduzieren (S21) der zu übertragenden Energie seitens der ersten Vorrichtung (2),
- Starten (S22) eines Zeitmessers,
- kontinuierliches Überprüfen (S23), ob ein aktueller Wert des Zeitmessers einen durch die vordefinierte Zeitspanne festgelegten Wert erreicht hat,
- Beenden (S24) des Zeitmessers, und
- Erhöhen (S25) der zu übertragenden Energie.

**11.** Verfahren nach Anspruch 9 oder Anspruch 10, ferner umfassend:
- kontinuierliches Überprüfen (S31) der empfangenen Energie seitens der zweiten Vorrichtung (4),
- Starten (S32) eines Zeitmessers bei Feststellung einer negativen Abweichung der empfangenen Energie,
- Beenden (S33) des Zeitmessers bei Feststellung einer positiven Abweichung der empfangenen Energie, und
- Ermitteln (S34) einer Zeitspanne zwischen Starten des Zeitmessers und Beenden des Zeitmessers.
